# FASCICULE DE BREVET EUROPEEN

(11) **EP 3 708 905 B1**
(45) Date de publication et mention de la délivrance du brevet: **09.11.2022**
(21) Numéro de dépôt: 20158866.2
(22) Date de dépôt: 21.02.2020
(51) Int. Cl.: F21S 41/33, F21S 41/147, F21S 41/148, F21S 41/255, F21S 41/365, F21S 41/32, F21S 41/25

(54) **DISPOSITIF LUMINEUX IMAGEANT UNE SURFACE ECLAIREE VIRTUELLE D'UN COLLECTEUR**
BELEUCHTUNGSVORRICHTUNG ZUR ABBILDUNG EINES GESPIEGELTEN BILDS EINES KOLLEKTORS
LIGHTING DEVICE IMAGING THE MIRRORED IMAGE OF A LIGHT COLLECTOR

(30) Priorité: 14.03.2019 FR 1902615
(43) Date de publication de la demande: 16.09.2020
(60) Demande divisionnaire: 22198166.5
(73) Titulaire: Valeo Vision, 93012 Bobigny Cedex (FR)
(72) Inventeur: GIRAUD, Sylvain, 49000 ANGERS (FR)
(74) Mandataire: Valeo Visibility

(56) Documents cités:
- EP-A2- 1 857 731
- FR-A1- 3 038 695
- JP-A- 2007 287 522
- JP-A- 2009 259 468
- US-A1- 2016 186 954

## Description

### Domaine technique

L'invention a trait au domaine de l'éclairage et de la signalisation lumineuse, plus particulièrement dans le domaine automobile.

### Technique antérieure

Le document de brevet publié FR 3 047 541 A1 divulgue un dispositif d'éclairage comprenant deux modules optiques disposés de manière opposée. Chacun de ces deux modules optiques comprend, essentiellement, une source lumineuse et un collecteur avec une surface réfléchissante. Ces deux sources lumineuses sont disposées sur deux faces opposées d'un support commun. Chacune des surfaces réfléchissantes est une surface de révolution dans un demi-espace délimité par le support commun des sources lumineuses. Les deux surfaces réfléchissantes forment ainsi deux demi-coquilles opposées l'une à l'autre. Un des deux modules optiques est configuré pour former un faisceau d'éclairage à coupure horizontale, correspondant à un faisceau dit « code » (en anglais « low-beam »). Pour ce faire, le module comprend une surface réfléchissante avec un bord dit de « coupure » situé au niveau d'un foyer de la surface réfléchissante. Les rayons rencontrant la surface en question à l'arrière du bord de coupure sont réfléchis vers une partie supérieure d'une lentille de projection alors que ceux passant à l'avant du bord en question ne sont pas déviés et rencontrent une partie inférieure de la lentille en question. Ce phénomène assure une coupure, essentiellement horizontale, du faisceau. L'autre des deux systèmes optiques fonctionne essentiellement de la même manière, à cette différence près que le foyer de la surface réfléchissante est situé à l'avant du bord de coupure. Le faisceau produit par le deuxième système optique est combiné avec celui du premier système pour produire un faisceau d'éclairage du type « route » (en anglais « high-beam »), c'est-à-dire un faisceau sans coupure horizontale. Cette configuration est intéressante en ce qu'elle exploite le faisceau à coupure pour produire un faisceau du type « route ».

Un tel dispositif lumineux présente l'inconvénient de requérir une précision importante au niveau du positionnement de la plieuse et du bord de coupure. Aussi, la lentille de projection doit être une lentille épaisse en raison de sa faible distance focale, ce qui augmente son poids et complique sa production, comme notamment des défauts de retassures. De plus, le collecteur présente une certaine hauteur et, partant, un certain encombrement en hauteur.

Les documents FR 3 038 695 A1 et EP 1 857 731 A2 décrivent d'autres dispositifs lumineux pour véhicules automobiles.

### Exposé de l'invention

L'invention a pour objectif de pallier au moins un des inconvénients de l'état de la technique susmentionné. Plus particulièrement, l'invention a pour objectif de proposer un module ou dispositif lumineux d'éclairage et/ou de signalisation qui soit compact et plus économique à produire.

L'invention , définie dans la revendication 1, a pour objet un dispositif lumineux, notamment pour véhicule automobile, comprenant une source lumineuse apte à émettre des rayons lumineux ; un collecteur avec une surface réfléchissante configurée pour collecter et réfléchir les rayons lumineux émis par la source lumineuse ; un système optique configuré pour projeter les rayons lumineux provenant de la surface réfléchissante en un faisceau lumineux suivant un axe optique du dispositif lumineux ; remarquable en ce que le dispositif lumineux comprend un miroir configuré pour former une image virtuelle de la source lumineuse et de la surface réfléchissante du collecteur, et le système optique est configuré pour former une image de ladite image virtuelle.

La source lumineuse et la surface réfléchissante forment un module lumineux. Un module lumineux est apte à former un faisceau lumineux. Le dispositif lumineux peut comprendre plusieurs modules lumineux. En présence d'un seul module lumineux, le dispositif lumineux est assimilable au module lumineux. Le dispositif lumineux forme un assemblage autonome en ce que chacun de ses composants, comme par exemple la ou les sources lumineuses, le ou les collecteurs et le système optique, est rigidement lié aux autres des composants, notamment via un support spécifique (non détaillé), et est ainsi positionné optiquement par rapport aux autres composants. Un ou plusieurs dispositifs lumineux peuvent ainsi être disposés dans un boîtier de projecteur afin de réaliser, le cas échéant en combinaison, toutes les fonctions réglementaires d'éclairage et de signalisation.

Selon un mode avantageux de l'invention, la surface réfléchissante du collecteur et le miroir sont configurés pour que les rayons lumineux réfléchis par une partie arrière de ladite surface réfléchissante soient parallèles à l'axe optique ou présentent, dans un plan vertical et par rapport audit axe, un angle d'inclinaison inférieur ou égal à 25°, préférentiellement inférieur ou égal à 10°.

Selon un mode avantageux de l'invention, le miroir est plan et parallèle à l'axe optique ou est incliné par rapport audit axe optique d'un angle inférieur à 10°.

Selon un mode avantageux de l'invention, la source lumineuse est configurée pour émettre les rayons lumineux dans une direction principale perpendiculaire à l'axe optique ou inclinée par rapport à une direction perpendiculaire audit axe optique d'un angle inférieur à 25°.

Selon un mode avantageux de l'invention, la surface réfléchissante du collecteur présente un profil parabolique ou elliptique. De préférence, elle est une surface de révolution dudit profil. La révolution est autour d'un axe avantageusement parallèle à l'axe optique. Selon une variante, la surface réfléchissante est une surface de forme libre (en langue anglaise « free form ») ou une surface balayée ou une surface asymétrique. Elle peut aussi comporter plusieurs secteurs.

Selon un mode avantageux de l'invention, le miroir s'étend dans un prolongement, vers le système optique, de la surface réfléchissante du collecteur.

Selon un mode avantageux de l'invention, la surface réfléchissante du collecteur est configurée pour réfléchir les rayons lumineux émis par la source lumineuse suivant une direction principale divergente avec l'axe optique.

Selon un mode avantageux de l'invention, la source lumineuse est disposée sur un substrat, le miroir étant aligné avec ledit substrat.

Selon un mode avantageux de l'invention, la surface réfléchissante du collecteur est configurée pour réfléchir les rayons lumineux émis par la source lumineuse suivant une direction principale convergente avec l'axe optique, ledit axe optique passant par le substrat.

Selon l'invention, le système optique présente un foyer situé sur une zone située entre la source lumineuse virtuelle et la surface réfléchissante virtuelle.

Selon un mode avantageux de l'invention, le foyer du système optique est situé sur la surface réfléchissante virtuelle, à l'arrière de la source lumineuse virtuelle suivant l'axe optique.

Selon un mode avantageux de l'invention, le système optique comprend une lentille correspondant à une portion de lentille convergente centrée sur un axe optique virtuel parallèle à l'axe optique et passant par le foyer du système optique.

Selon un mode avantageux de l'invention, la surface réfléchissante du collecteur présente un bord arrière, le faisceau lumineux étant un faisceau à coupure horizontale, ladite coupure étant une image dudit bord arrière.

Selon un mode avantageux de l'invention, la source lumineuse et le collecteur sont situés au-dessus de l'axe optique lorsque le dispositif lumineux est en position fonctionnelle, la coupure du faisceau lumineux étant une coupure inférieure.

Selon un mode avantageux de l'invention, la source lumineuse et le collecteur sont situés en-dessous de l'axe optique lorsque le dispositif lumineux est en position fonctionnelle, la coupure du faisceau lumineux étant une coupure supérieure.

Selon un mode avantageux de l'invention, la source lumineuse, le collecteur et le faisceau lumineux sont une première source lumineuse, un premier collecteur et un premier faisceau lumineux, respectivement, le dispositif lumineux comprenant une deuxième source lumineuse et un deuxième collecteur avec une surface réfléchissante configurée pour collecter et réfléchir les rayons lumineux émis par la deuxième source lumineuse, le système optique étant configuré pour projeter les rayons lumineux provenant de ladite surface réfléchissante en un deuxième faisceau lumineux suivant un axe optique du dispositif et correspondant à une image de ladite surface réfléchissante.

Le premier collecteur et la première source lumineuse forment un premier module lumineux et le deuxième collecteur et la deuxième source lumineuse forment un deuxième module lumineux.

Avantageusement, le dispositif lumineux est configuré pour que le deuxième faisceau lumineux soit une image réelle de la surface réfléchissante du deuxième collecteur éclairée par la deuxième source lumineuse. A cet effet, les rayons lumineux réfléchis par la surface réfléchissante du deuxième collecteur sont transmis au système optique sans être réfléchis par un miroir, contrairement aux rayons lumineux réfléchis par la surface réfléchissante du premier collecteur.

Selon un mode avantageux de l'invention, le premier collecteur et la première source lumineuse sont opposés, par rapport à l'axe optique, au deuxième collecteur et à la deuxième source lumineuse, respectivement ; ou le premier collecteur et la première source lumineuse, d'une part, et le deuxième collecteur et la deuxième source lumineuse, d'autre part, sont disposés côte-à-côte.

Les mesures de l'invention sont intéressantes en ce qu'elles permettent de réaliser un module ou dispositif lumineux compact, d'assemblage facile avec un nombre de pièces réduit et apte à réaliser différentes fonctions d'éclairage et/ou de signalisation. Plus particulièrement, le fait d'imager la surface réfléchissante éclairée du collecteur permet de réaliser un faisceau lumineux avec une concentration de lumière à une position décentrée verticalement dudit faisceau. Aussi, l'invention permet de très facilement retourner l'image produite et ainsi de moduler le ou les faisceaux lumineux aux fonctions d'éclairage et/ou de signalisation à assurer, en particulier les fonctions d'éclairage « code » et « route ».

D'autres caractéristiques et avantages de la présente invention seront mieux compris à l'aide de la description et des dessins.

### Brève description des dessins

[Fig 1] est une représentation schématique d'un dispositif lumineux selon un premier mode de réalisation de l'invention.
[Fig 2] est une vue en perspective du collecteur supérieur du dispositif lumineux de la figure 1.
[Fig 3] est une vue de la surface intérieure éclairée du collecteur du dispositif lumineux de la figure 1, depuis l'extérieur suivant l'axe optique.
[Fig 4] est une représentation graphique de l'image lumineuse du faisceau d'éclairage produit par le dispositif lumineux de la figure 1.
[Fig 5] est une représentation schématique d'un dispositif lumineux selon une variante du premier mode de réalisation de l'invention.
[Fig 6] est une représentation graphique de l'image lumineuse du faisceau d'éclairage produit par le dispositif lumineux de la figure 5.
[Fig 7] est une représentation schématique d'un dispositif lumineux selon un deuxième mode de réalisation de l'invention.
[Fig 8] est une représentation schématique d'un dispositif lumineux selon une variante du deuxième mode de réalisation de l'invention.

### Description détaillée

Dans la description qui va suivre, les notions de « au-dessus » et « en-dessous » de l'axe optique du dispositif lumineux sont à comprendre lorsque le dispositif lumineux est en position fonctionnelle, c'est-à-dire avec une orientation qui correspond à celle pour laquelle il a été conçu. Similairement, les notions « avant » et « arrière » sont à comprendre suivant la direction générale de la lumière, suivant l'axe optique, lorsque le dispositif lumineux est en position fonctionnelle.

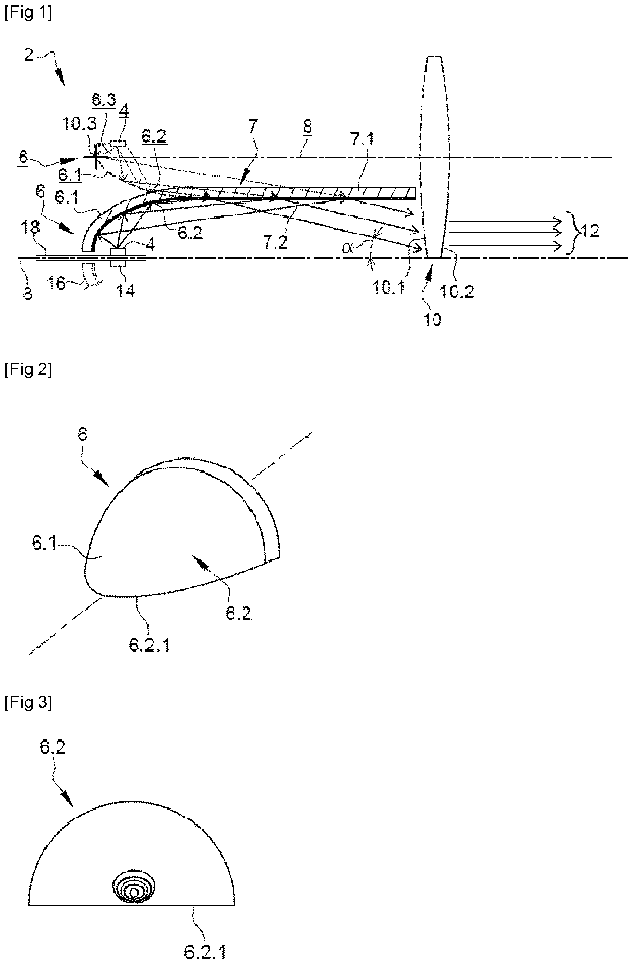

Les figures 1 à 4 illustrent un premier mode de réalisation d'un dispositif lumineux selon l'invention.

La figure 1 est une représentation schématique du dispositif lumineux et de son principe de fonctionnement. Le dispositif lumineux 2 comprend, essentiellement, une source lumineuse 4, un collecteur 6 apte à réfléchir les rayons lumineux émis par la source lumineuse pour former un premier faisceau lumineux 12 suivant un axe optique 8 du dispositif, et une lentille de projection 10 dudit faisceau. D'autres systèmes optiques de projection que la lentille de projection sont envisageables, comme notamment un ou plusieurs miroirs.

La source lumineuse 4 est avantageusement du type à semi-conducteur, comme notamment une diode à électroluminescence. La source lumineuse 4 émet des rayons lumineux dans un demi-espace délimité par le plan principal de ladite source, selon l'exemple représenté, dans une direction principale perpendiculaire audit plan et à l'axe optique 8. Selon l'invention, la direction principale d'émission pourra être inclinée par rapport à une direction perpendiculaire à l'axe optique d'un angle inférieur ou égal à 25°.

Le collecteur 6 comprend un support 6.1, en forme de coque ou calotte, et une surface réfléchissante 6.2 sur la face intérieure du support 6.1. La surface réfléchissante 6.2 est avantageusement de profil du type elliptique ou parabolique ou « free form ». Le dispositif lumineux 2 comprend également un miroir 7 disposé dans le prolongement de la surface réfléchissante 6.2 du collecteur 6. Le miroir 7 comprend un support 7.1 et une surface réfléchissante plane 7.2 formée sur le support 7.1. Ce dernier peut être confondu ou adjacent au support 6.1 du collecteur. La surface réfléchissante 6.2 du collecteur 6 est avantageusement une surface de révolution autour d'un axe parallèle à l'axe optique 8. Alternativement, il peut s'agir d'une surface de forme libre (en langue anglaise « free form ») ou une surface balayée ou une surface asymétrique. Elle peut aussi comporter plusieurs secteurs. L'expression « type parabolique » s'applique de manière générale à des réflecteurs dont la surface présente un seul foyer, c'est-à-dire une zone de convergence des rayons lumineux telle que les rayons lumineux émis par une source lumineuse placée au niveau de cette zone de convergence sont projetés à grande distance après réflexion sur la surface. Projeté à grande distance signifie que ces rayons lumineux ne convergent pas vers une zone située à au moins 10 fois les dimensions du réflecteur. Autrement dit les rayons réfléchis ne convergent pas vers une zone de convergence ou, s'ils convergent, cette zone de convergence est située à une distance supérieure ou égale à 10 fois les dimensions du réflecteur. Une surface de type parabolique peut donc présenter ou non des portions paraboliques. Un réflecteur présentant une telle surface est généralement utilisé seul pour créer un faisceau lumineux. Alternativement il peut être utilisé comme surface de projection associée à un réflecteur de type elliptique. Dans ce cas la source lumineuse du réflecteur de type parabolique est la zone de convergence des rayons réfléchis par le réflecteur de type elliptique.

Le miroir 7, plus particulièrement sa surface réfléchissante plane 7.2 est avantageusement parallèle à l'axe optique 8. Elle peut cependant être inclinée par rapport audit axe, par exemple d'un angle inférieur ou égal à 10°. Si elle est inclinée, le miroir est avantageusement divergent avec l'axe optique dans la direction principale de propagation de la lumière, c'est-à-dire de la source lumineuse 4 vers la lentille de projection 10.

Le collecteur 6 en forme de coque ou de calotte est avantageusement réalisé dans des matériaux présentant une bonne tenue à la chaleur, par exemple du verre ou des polymères synthétiques comme du polycarbonate PC ou du polyétherimide PEI.

La source lumineuse 4 est disposée à un foyer de la surface réfléchissante 6.2 du collecteur 6 de manière à ce que ses rayons soient collectés et réfléchis vers le miroir 7. Ce dernier forme une image virtuelle 6.2 de la surface réfléchissante 6.2 et une image virtuelle 4 de la source lumineuse 4, représentées en trait interrompu à la figure 1. Le système optique 10 projette une image lumineuse de l'image virtuelle 6.2 de la surface réfléchissante 6.2 et l'image virtuelle 4 de la source lumineuse 4. Au moins une partie de ces rayons réfléchis par le miroir 7 présente des angles d'inclinaison α par rapport audit axe, dans un plan vertical, qui sont inférieurs ou égaux à 25°, de préférence inférieurs ou égaux à 10°, de manière à être dans les conditions dites de Gauss, permettant d'obtenir un stigmatisme, c'est-à-dire une netteté de l'image projetée. Il s'agit avantageusement des rayons réfléchis par la partie arrière de la surface réfléchissante 6.2 du collecteur 6.

La lentille de projection 10 présente une première face d'entrée 10.1 et face de sortie 10.2. La lentille 10 est dite mince, par exemple avec une épaisseur suivant l'axe optique qui est inférieure à 7mm, notamment en raison de la faible hauteur de lentille et de la longue focale de celle-ci. La lentille 10 peut présenter un foyer 10.3 avantageusement situé entre la source lumineuse virtuelle et la surface réfléchissante virtuelle. Le foyer 10.3 en question est avantageusement situé sur une zone 6.3 située entre les images virtuelles 6.2 et 4 de la surface réfléchissante 6.2 et de la source lumineuse 4. En l'occurrence le foyer peut être situé sur l'image virtuelle 6.2 de la surface réfléchissante 6.2, axialement (c'est-à-dire suivant l'axe optique) en arrière de l'image virtuelle 4 de la source lumineuse virtuelle 4. Il est à noter qu'il est aussi possible que ce foyer soit situé à l'arrière ou à l'avant de l'image virtuelle de la surface réfléchissante 6.2 du collecteur 6 pour autant que ce soit à proximité, de préférence à moins de 10 mm, préférentiellement moins de 5 mm.

Il est aussi à noter que la lentille 10 est avantageusement du type convergent symétrique par rapport l'axe optique virtuel 8 (en trait interrompu) situé au-dessus de l'axe optique 8 et avantageusement passant par le foyer 10.3.

La surface réfléchissante 6.2 du collecteur 6, si elle est du type elliptique, présente un deuxième foyer situé à l'avant de la lentille 10 et à distance de l'axe optique 8. Il est à noter qu'il est aussi possible que ce foyer soit situé à l'arrière de la lentille et/ou sur l'axe optique, pour autant que ce soit à proximité de la lentille, de manière à réduire la largeur du faisceau au niveau de la face d'entrée de la lentille.

La source lumineuse 4 et le collecteur 6 sont avantageusement une première source lumineuse et un premier collecteur, le dispositif pouvant alors comprendre une deuxième source lumineuse 14 et un deuxième collecteur 16 (représentés en trait interrompu). En l'occurrence, la première source lumineuse 4 et le premier collecteur 6, formant un premier module lumineux, et la deuxième source lumineuse 14 et le deuxième collecteur 16, formant un deuxième module lumineux, sont opposés par rapport à l'axe optique 8. Plus particulièrement, les première et deuxième sources lumineuses 4 et 14 sont sur des faces opposées d'un substrat commun par lequel passe l'axe optique 8.

La figure 2 est une vue arrière, en perspective, d'une partie arrière du collecteur 6 du dispositif lumineux 2 de la figure 1. On peut observer la forme de coquille ou calotte du support 6.1, ainsi que le fait que la surface réfléchissante 6.2 (non visible) présente un bord arrière 6.2.1. Compte-tenu du fait que le support 6.1 et, par voie de conséquence, la surface réfléchissante 6.2 forment une coque préférentiellement symétrique en révolution et délimitée par un plan, le plan en question comprend le bord arrière 6.2.1. Celui-ci s'étend dans le plan latéralement de part et d'autre de l'axe de révolution. Lorsque la surface réfléchissante 6.2 est éclairée par la source lumineuse, elle est alors illuminée sur la totalité de sa surface, celle-ci étant délimitée notamment par le bord arrière 6.2.1.

La figure 3 est une représentation de l'intensité lumineuse au niveau de la surface réfléchissante 6.2 du collecteur vue depuis l'extérieur, suivant l'axe optique. Il s'agit de l'image projetée de l'image virtuelle de la surface réfléchissante 6.2 du collecteur, produite par le miroir 7 (figure 1). Plus spécifiquement, l'éclairement de la surface, à savoir la puissance du rayonnement électromagnétique frappant par unité de surface perpendiculaire à sa direction, exprimée en W/m². La zone foncée couvrant la majorité de la surface, correspond à des éclairements plus faibles alors que la zone centrale, plus claire, correspond à des éclairements plus grands. On peut observer que la zone foncée est délimitée de manière nette par le bord inférieur 6.2.1. En d'autres termes, la surface éclairée 6.2 présente naturellement un bord inférieur net apte à former une coupure dans le faisceau d'éclairage projeté imageant cette surface et aussi une force concentration de lumière, en position centrale à hauteur de la source lumineuse.

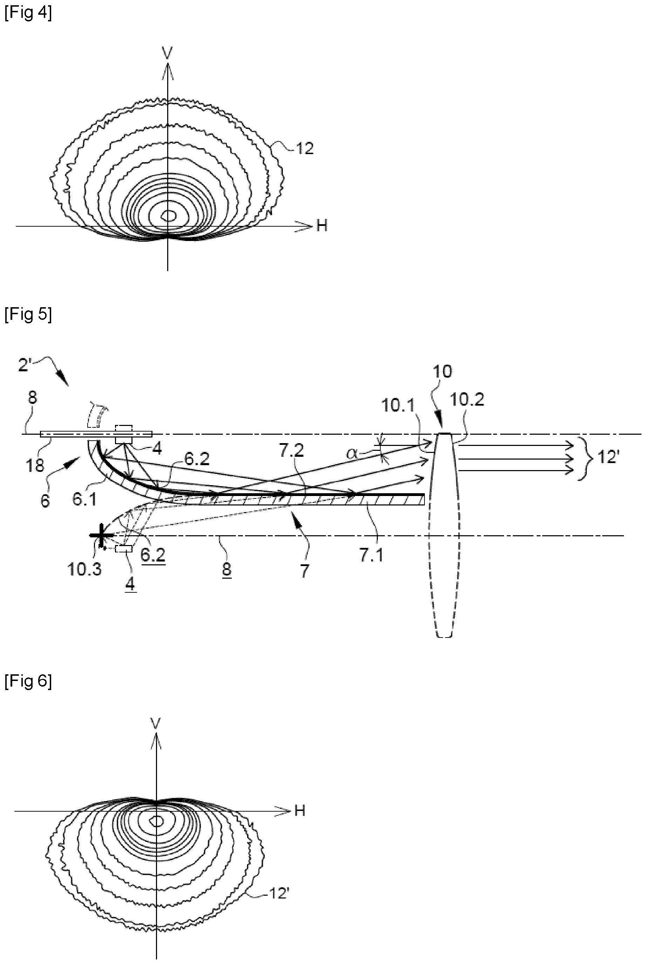

La figure 4 est une représentation graphique de l'image projetée par le dispositif lumineux de la figure 1. L'axe horizontal H et l'axe vertical V se croisent au niveau de l'axe optique du dispositif lumineux. Les courbes sont des isolux, c'est-à-dire correspondent aux zones du faisceau lumineux 12 qui présentent un même éclairement exprimé en lux. Les courbes au centre correspondent à un niveau d'éclairement plus élevé qu'à la périphérie.

On peut observer à la figure 4 que le faisceau lumineux 12 présente une coupure horizontale inférieure, essentiellement au niveau de l'axe horizontal. La coupure n'est pas parfaitement droite ; elle présente une courbure qui correspond à des aberrations de l'image ainsi produite. En tout état de cause, la coupure horizontale est réalisée par le bord 6.2.1 (figure 3) qui est le bord arrière (figure 2) de la surface réfléchissante 6.2 du collecteur 6. A cet effet, le foyer 10.3 de la lentille 10 (figure 1) est avantageusement situé à proximité de ce bord (figure 3) sur la surface réfléchissante virtuelle, c'est-à-dire à l'arrière de l'image virtuelle 4 de la (première) source lumineuse 4. On peut également observer que le faisceau lumineux produit présente une importante concentration de lumière au-dessus de l'axe horizontal H.

Ce faisceau lumineux 12 est ainsi particulièrement adapté pour réaliser une fonction d'éclairage du type « route » (« high-beam » en anglais) en complément d'une fonction d'éclairage du type « code » (« low-beam » en anglais).

La figure 5 est une représentation schématique d'une variante du dispositif lumineux 2 du premier mode de réalisation de l'invention, illustré à la figure 1. Cette variante de se distingue de la figure 1 en ce que les composants du dispositif lumineux 2' sont retournés de 180° par rapport à l'axe optique 8, toutes autres choses pouvant être égales.

Le faisceau lumineux produit 12' est illustré à la figure 6 qui est à comparer à la figure 4. On peut observer un retournement de l'image lumineuse, à savoir avec une coupure horizontale supérieure et une forte concentration de lumière sous et au niveau de l'axe horizontal. Ce faisceau lumineux est particulièrement adapté pour réaliser une fonction d'éclairage du type « code » (« low-beam » en anglais).

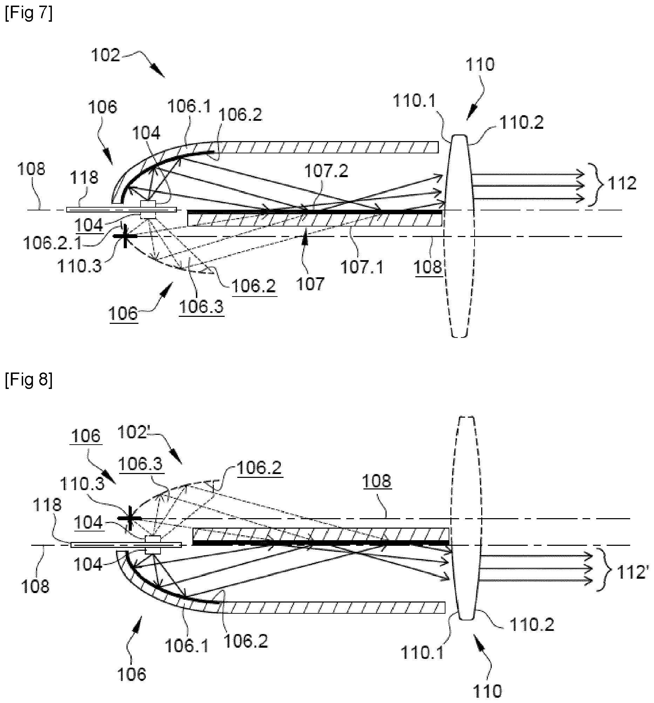

La figure 7 est une vue schématique d'un dispositif lumineux selon un deuxième mode de réalisation de l'invention. Les numéros de référence du premier mode de réalisation sont utilisés pour désigner les éléments identiques ou correspondants, ces numéros étant toutefois majorés de 100. Il est par ailleurs fait référence à la description de ces éléments dans le cadre du premier mode de réalisation. Des numéros spécifiques compris entre 100 et 200 sont utilisés pour désigner les éléments spécifiques à ce mode de réalisation.

Ce deuxième mode de réalisation se distingue du premier mode de réalisation à la figure 1 essentiellement en ce que le miroir configuré pour former une image virtuelle de la source lumineuse et de la surface réfléchissante est disposé différemment, à savoir au niveau de l'axe optique 108 ou du moins à proximité de celui-ci. Le miroir 107 s'étend en effet le long de l'axe optique 108, ce dernier étant avantageusement aligné avec le support de la source lumineuse 104. La surface réfléchissante 106.2 du collecteur est configurée pour réfléchir vers le miroir les rayons émis par la source lumineuse 104. Ces rayons réfléchis correspondent à des images virtuelles 106.2 et 104 de la surface réfléchissante 106.2 et de la source lumineuse 104, représentées en trait interrompu. Le faisceau lumineux produit 112 va alors correspondre essentiellement au faisceau lumineux 12 du première mode de réalisation, illustré à la figure 4.

Similairement au premier mode de réalisation, la lentille 110 peut présenter un foyer 110.3 avantageusement situé entre la source lumineuse virtuelle et la surface réfléchissante virtuelle. Le foyer 110.3 en question est avantageusement situé sur une zone 106.3 située entre l'image virtuelle 106.2 de la surface réfléchissante 106.2 et l'image virtuelle 104 de la source lumineuse 104. En l'occurrence le foyer peut être situé sur l'image virtuelle 106.2 de la surface réfléchissante 106.2, axialement (c'est-à-dire suivant l'axe optique) en arrière de l'image virtuelle 104 de la source lumineuse 104. Il est à noter qu'il est aussi possible que ce foyer soit situé à l'arrière ou à l'avant de l'image virtuelle 106.2 de la surface réfléchissante 106.2 du collecteur 106 pour autant que ce soit à proximité, de préférence à moins de 10 mm, préférentiellement moins de 5 mm.

Encore similairement au premier mode de réalisation, le miroir 107, plus particulièrement sa surface réfléchissante plane 107.2 est avantageusement parallèle à l'axe optique 108. Elle peut cependant être inclinée par rapport audit axe, par exemple d'un angle inférieur ou égal à 10°.

Toujours similairement au premier mode de réalisation, la source lumineuse 104 et le collecteur 106 sont avantageusement une première source lumineuse et un premier collecteur, le dispositif pouvant alors comprendre une deuxième source lumineuse et un deuxième collecteur. En l'occurrence, la première source lumineuse 104 et le premier collecteur 106, d'un part, et la deuxième source lumineuse et le deuxième collecteur, d'autre part, peuvent être opposés par rapport à l'axe optique 8. Alternativement, ils peuvent être disposés côte-à-côte.

La figure 8 est une représentation schématique d'une variante du dispositif lumineux 102 du deuxième mode de réalisation de l'invention illustré à la figure 7. Cette variante se distingue de la figure 7 en ce que les composants du dispositif lumineux 102' sont retournés de 180° par rapport à l'axe optique 108, toutes autres choses pouvant être égales.

Le faisceau lumineux produit 112' correspond essentiellement au faisceau lumineux 12' produit par le dispositif lumineux de la figure 5 et illustrée à la figure 6. Il s'agit d'une image lumineuse retournée par rapport à celle du faisceau lumineux 112 produit par le dispositif lumineux de la figure 7, correspondant essentiellement à celui de la figure 4, à savoir avec une coupure horizontale supérieure et une force concentration de lumière sous et au niveau de l'axe horizontal H. Ce faisceau lumineux est particulièrement adapté pour réaliser une fonction d'éclairage du type « code » (« low-beam » en anglais).

De manière générale, les dispositifs lumineux qui viennent d'être décrits sont particulièrement intéressants en ce que, en imageant la surface réfléchissante éclairée, ils permettent de réaliser des faisceaux lumineux avec une concentration de lumière à une position décentrée verticalement. Ces faisceaux sont particulièrement utiles pour réaliser les fonctions « code » (« low-beam » en anglais) et « route » (« high-beam » en anglais). De plus, ces dispositifs lumineux, de par l'utilisation d'un miroir, permettent de retourner la source lumineuse et le collecteur associé à la source lumineuse, et ainsi s'accommoder de contraintes d'encombrement.

## Revendications

1. Dispositif lumineux (2 ; 102), notamment pour véhicule automobile, comprenant :
- une source lumineuse (4 ; 104) apte à émettre des rayons lumineux ;
- un collecteur (6 ; 106) avec une surface réfléchissante (6.2 ; 106.2) configurée pour collecter et réfléchir les rayons lumineux émis par la source lumineuse (4 ; 104) ;
- un système optique (10 ; 110) configuré pour projeter les rayons lumineux provenant de la surface réfléchissante (6.2 ; 106.2) en un faisceau lumineux (12 ; 112) suivant un axe optique du dispositif lumineux (8 ; 108) ;
le dispositif lumineux (2 ; 102) comprenant un miroir (7 ; 107) configuré pour former une image virtuelle (4, 6.2 ; 104, 106.2) de la source lumineuse et de la surface réfléchissante du collecteur (6 ; 106), et le système optique (10 ; 110) étant configuré pour former une image de ladite image virtuelle (4, 6.2 ; 104, 106.2)
**caractérisé en ce que** le système optique (10 ; 110) présente un foyer (10.3 ; 110.3) situé sur une zone située entre l'image virtuelle (4 ; 104) de la source lumineuse (4 ; 104) et l'image virtuelle (6.2 ; 106.2) de la surface réfléchissante (6.2 ; 106.2).

2. Dispositif lumineux (2 ; 102) selon la revendication 1, **caractérisé en ce que** la surface réfléchissante (6.2 ; 106.2) du collecteur (6 ; 106) et le miroir (7 ; 107) sont configurés pour que les rayons lumineux réfléchis par une partie arrière de ladite surface réfléchissante (6.2 ; 106.2) soient parallèles à l'axe optique (8, 108) ou présentent, dans un plan vertical et par rapport audit axe, un angle d'inclinaison inférieur ou égal à 25°, préférentiellement inférieur ou égal à 10°.

3. Dispositif lumineux (2 ; 102) selon l'une des revendications 1 et 2, **caractérisé en ce que** le miroir (7 ; 107) est plan et parallèle à l'axe optique (8 ; 108) ou est incliné par rapport audit axe optique d'un angle inférieur à 10°.

4. Dispositif lumineux (2 ; 102) selon l'une des revendications 1 à 3, **caractérisé en ce que** la source lumineuse (4 ; 104) est configurée pour émettre les rayons lumineux dans une direction principale perpendiculaire à l'axe optique (8 ; 108) ou inclinée par rapport à une direction perpendiculaire audit axe optique d'un angle inférieur à 25°.

5. Dispositif lumineux (2 ; 102) selon l'une des revendications 1 à 4, **caractérisé en ce que** la surface réfléchissante (6.2 ; 106.2) du collecteur (6 ; 106) présente un profil parabolique ou elliptique.

6. Dispositif lumineux (2) selon l'une des revendications 1 à 5, **caractérisé en ce que** le miroir (7) s'étend dans un prolongement, vers le système optique (10), de la surface réfléchissante (6.2) du collecteur (6).

7. Dispositif lumineux (2) selon l'une des revendications 1 à 6, **caractérisé en ce que** la surface réfléchissante (6.2) du collecteur (2) est configurée pour réfléchir les rayons lumineux émis par la source lumineuse (4) suivant une direction principale divergente avec l'axe optique (8).

8. Dispositif lumineux (102) selon l'une des revendications 1 à 5, **caractérisé en ce que** la source lumineuse (104) est disposée sur un substrat (118), le miroir (7) étant aligné avec ledit substrat (118).

9. Dispositif lumineux (102) selon la revendication 8, **caractérisé en ce que** la surface réfléchissante (106.2) du collecteur (6) est configurée pour réfléchir les rayons lumineux émis par la source lumineuse (104) suivant une direction principale convergente avec l'axe optique (108), ledit axe optique passant par le substrat (118).

10. Dispositif lumineux (2 ; 102) selon l'une des revendications 1 à 9, **caractérisé en ce que** le foyer (10.3 ; 110.3) du système optique (10 ; 110) est situé sur l'image virtuelle (6.2 ; 106.2) de la surface réfléchissante (6.2 ; 106.2), à l'arrière de l'image virtuelle (4 ; 104) de la source lumineuse virtuelle (4 ; 104) suivant l'axe optique (8 ; 108).

11. Dispositif lumineux (2 ; 102) selon la revendication 10, **caractérisé en ce que** le système optique comprend une lentille (10 ; 110) correspondant à une portion de lentille convergente centrée sur un axe optique virtuel (8 ; 108) parallèle à l'axe optique (8 ; 108) et passant par le foyer (10.3 ; 110.3) du système optique.

12. Dispositif lumineux (2 ; 102) selon l'une des revendications 1 à 11, **caractérisé en ce que** la surface réfléchissante (6.2 ; 106.2) du collecteur (6 ; 106) présente un bord arrière (6.2.1 ; 106.2.1), le faisceau lumineux (12 ; 112) étant un faisceau à coupure horizontale, ladite coupure étant une image dudit bord arrière.

13. Dispositif lumineux (2 ; 102) selon la revendication 12, **caractérisé en ce que** la source lumineuse (4 ; 104) et le collecteur (6 ; 106) sont situés au-dessus de l'axe optique (8 ; 108) lorsque le dispositif lumineux est en position fonctionnelle, la coupure du faisceau lumineux (12 ; 112) étant une coupure inférieure.

14. Dispositif lumineux (2' ; 102') selon la revendication 12, **caractérisé en ce que** la source lumineuse (4 ; 104) et le collecteur (6 ; 106) sont situés en-dessous de l'axe optique (8 ; 108) lorsque le dispositif lumineux est en position fonctionnelle, la coupure du faisceau lumineux (12' ; 112') étant une coupure supérieure.

15. Dispositif lumineux (2) selon l'une des revendications 1 à 14, **caractérisé en ce que** la source lumineuse (4 ; 104), le collecteur (6 ; 106) et le faisceau lumineux (12 ; 112) sont une première source lumineuse, un premier collecteur et un premier faisceau lumineux, respectivement, le dispositif lumineux comprenant une deuxième source lumineuse (14) et un deuxième collecteur (16) avec une surface réfléchissante configurée pour collecter et réfléchir les rayons lumineux émis par la deuxième source lumineuse (14), le système optique (10 ; 110) étant configuré pour projeter les rayons lumineux provenant de ladite surface réfléchissante en un deuxième faisceau lumineux suivant un axe optique du dispositif et correspondant à une image de ladite surface réfléchissante.

16. Dispositif lumineux selon la revendication 15, **caractérisé en ce que** le premier collecteur (6 ; 106) et la première source lumineuse (4 ; 104) sont opposés, par rapport à l'axe optique (8 ; 108), au deuxième collecteur (16) et à la deuxième source lumineuse (14), respectivement ; ou le premier collecteur et la première source lumineuse, d'une part, et le deuxième collecteur et la deuxième source lumineuse, d'autre part, sont disposés côte-à-côte.

## Patentansprüche

1. Leuchtvorrichtung (2; 102) insbesondere für ein Kraftfahrzeug, umfassend:
- eine Lichtquelle (4; 104), die geeignet ist, Lichtstrahlen abzugeben;
- einen Kollektor (6; 106) mit einer reflektierenden Fläche (6.2; 106.2), die dazu ausgebildet ist, die Lichtstrahlen, die von der Lichtquelle (4; 104) abgegeben werden, zu sammeln und zu reflektieren;
- ein Optiksystem (10; 110), das dazu ausgebildet ist, die Lichtstrahlen von der reflektierenden Fläche (6.2; 106.2) in einem Lichtbündel (12; 112) entlang einer optischen Achse der Leuchtvorrichtung (8; 108) zu projizieren;
wobei die Leuchtvorrichtung (2; 102) einen Spiegel (7; 107) umfasst, der dazu ausgebildet ist, ein virtuelles Bild (4, 6.2; 104, 106.2) der Lichtquelle und der reflektierenden Fläche des Kollektors (6; 106) zu erzeugen, und das Optiksystem (10; 110) dazu ausgebildet ist, ein Bild des virtuellen Bilds (4, 6.2; 104, 106.2) zu erzeugen
**dadurch gekennzeichnet, dass** das Optiksystem (10; 110) einen Brennpunkt (10.3; 110.3) aufweist, der sich auf einem Bereich befindet, der sich zwischen dem virtuellen Bild (4; 104) der Lichtquelle (4; 104) und dem virtuellen Bild (6.2; 106.2) der reflektierenden Fläche (6.2; 106.2) befindet.

2. Leuchtvorrichtung (2; 102) nach Anspruch 1, **dadurch gekennzeichnet, dass** die reflektierende Fläche (6.2; 106.2) des Kollektors (6; 106) und der Spiegel (7; 107) dazu ausgebildet sind, dass die Lichtstrahlen, die von einem hinteren Abschnitt der reflektierenden Fläche (6.2; 106.2) reflektiert werden, parallel zur optischen Achse (8, 108) verlaufen oder in einer vertikalen Ebene und im Verhältnis zu der Achse einen Neigungswinkel kleiner als oder gleich 25°, vorzugsweise kleiner als oder gleich 10° aufweisen.

3. Leuchtvorrichtung (2; 102) nach einem der Ansprüche 1 und 2, **dadurch gekennzeichnet, dass** der Spiegel (7; 107) eben ist und parallel zur optischen Achse (8; 108) verläuft oder im Verhältnis zu der optischen Achse um einen Winkel kleiner als 10° geneigt ist.

4. Leuchtvorrichtung (2; 102) nach einem der Ansprüche 1 bis 3, **dadurch gekennzeichnet, dass** die Lichtquelle (4; 104) dazu ausgebildet ist, die Lichtstrahlen in einer Hauptrichtung senkrecht zur optischen Achse (8; 108) oder im Verhältnis zu einer Richtung senkrecht zur optischen Achse um einen Winkel kleiner als 25° geneigt abzugeben.

5. Leuchtvorrichtung (2; 102) nach einem der Ansprüche 1 bis 4, **dadurch gekennzeichnet, dass** die reflektierende Fläche (6.2; 106.2) des Kollektors (6; 106) ein parabolisches oder ellipsenförmiges Profil aufweist.

6. Leuchtvorrichtung (2) nach einem der Ansprüche 1 bis 5, **dadurch gekennzeichnet, dass** sich der Spiegel (7) in einer Verlängerung der reflektierenden Fläche (6.2) des Kollektors (6) zum Optiksystem (10) hin erstreckt.

7. Leuchtvorrichtung (2) nach einem der Ansprüche 1 bis 6, **dadurch gekennzeichnet, dass** die reflektierende Fläche (6.2) des Kollektors (2) dazu ausgebildet ist, die Lichtstrahlen, die von der Lichtquelle (4) abgegeben werden, in einer Hauptrichtung zu reflektieren, die von der optischen Achse (8) abweicht.

8. Leuchtvorrichtung (102) nach einem der Ansprüche 1 bis 5, **dadurch gekennzeichnet, dass** die Lichtquelle (104) auf einem Substrat (118) angeordnet ist, wobei der Spiegel (7) an dem Substrat (118) ausgerichtet ist.

9. Leuchtvorrichtung (102) nach Anspruch 8, **dadurch gekennzeichnet, dass** die reflektierende Fläche (106.2) des Kollektors (6) dazu ausgebildet ist, die Lichtstrahlen, die von der Lichtquelle (104) abgegeben werden, in einer Hauptrichtung zu reflektieren, die mit der optischen Achse (108) konvergiert, wobei die optische Achse durch das Substrat (118) verläuft.

10. Leuchtvorrichtung (2; 102) nach einem der Ansprüche 1 bis 9, **dadurch gekennzeichnet, dass** sich der Brennpunkt (10.3; 110.3) des Optiksystems (10; 110) auf dem virtuellen Bild (6.2; 106.2) der reflektierenden Fläche (6.2; 106.2) hinten am virtuellen Bild (4; 104) der virtuellen Lichtquelle (4; 104) entlang der optischen Achse (8; 108) befindet.

11. Leuchtvorrichtung (2; 102) nach Anspruch 10, **dadurch gekennzeichnet, dass** das Optiksystem eine Linse (10; 110) umfasst, die einem Sammellinsenabschnitt entspricht, der auf einer virtuellen optischen Achse (8; 108) zentriert ist, die parallel zur optischen Achse (8; 108) und durch den Brennpunkt (10.3; 110.3) des Optiksystems verläuft.

12. Leuchtvorrichtung (2; 102) nach einem der Ansprüche 1 bis 11, **dadurch gekennzeichnet, dass** die reflektierende Fläche (6.2; 106.2) des Kollektors (6; 106) eine Hinterkante (6.2.1; 106.2.1) aufweist, wobei das Lichtbündel (12; 112) ein Bündel mit horizontaler Hell-Dunkel-Grenze ist, wobei die Hell-Dunkel-Grenze ein Bild der Hinterkante ist.

13. Leuchtvorrichtung (2; 102) nach Anspruch 12, **dadurch gekennzeichnet, dass** sich die Lichtquelle (4; 104) und der Kollektor (6; 106) oberhalb der optischen Achse (8; 108) befinden, wenn sich die Leuchtvorrichtung in Betriebsposition befindet, wobei die Hell-Dunkel-Grenze des Lichtbündels (12; 112) eine untere Hell-Dunkel-Grenze ist.

14. Leuchtvorrichtung (2'; 102') nach Anspruch 12, **dadurch gekennzeichnet, dass** sich die Lichtquelle (4; 104) und der Kollektor (6; 106) unterhalb der optischen Achse (8; 108) befinden, wenn sich die Leuchtvorrichtung in Betriebsposition befindet, wobei die Hell-Dunkel-Grenze des Lichtbündels (12'; 112') eine obere Hell-Dunkel-Grenze ist.

15. Leuchtvorrichtung (2) nach einem der Ansprüche 1 bis 14, **dadurch gekennzeichnet, dass** die Leuchtvorrichtung (4; 104), der Kollektor (6; 106) und das Lichtbündel (12; 112) eine erste Lichtquelle, ein erster Kollektor bzw. ein erstes Lichtbündel sind, wobei die Leuchtvorrichtung eine zweite Lichtquelle (14) und einen zweiten Kollektor (16) mit einer reflektierenden Fläche umfasst, die dazu ausgebildet ist, die Lichtstrahlen, die von der zweiten Lichtquelle (14) abgegeben werden, zu sammeln und zu reflektieren, wobei das Optiksystem (10; 110) dazu ausgebildet ist, die Lichtstrahlen von der reflektierenden Fläche in einem zweiten Lichtbündel entlang einer optischen Achse der Vorrichtung und entsprechend einem Bild der reflektierenden Fläche zu projizieren.

16. Leuchtvorrichtung nach Anspruch 15, **dadurch gekennzeichnet, dass** der erste Kollektor (6; 106) und die erste Lichtquelle (4; 104) bezogen auf die optische Achse (8; 108) dem zweiten Kollektor (16) bzw. der zweiten Lichtquelle (14) gegenüberliegen; oder der erste Kollektor und die erste Lichtquelle einerseits und der zweite und die zweite Lichtquelle andererseits Seite an Seite angeordnet sind.

## Claims

1. Luminous device (2; 102), in particular for a motor vehicle, comprising:
- a light source (4; 104) able to emit light rays;
- a collector (6; 106) with a reflective surface (6.2; 106.2) configured to collect and reflect the light rays emitted by the light source (4; 104);
- an optical system (10; 110) configured to project the light rays coming from the reflective surface (6.2; 106.2) into a light beam (12; 112) along an optical axis of the luminous device (8; 108);
the luminous device (2; 102) comprising a mirror (7; 107) configured to form a virtual image (4, 6.2; 104, 106.2) of the light source and of the reflective surface of the collector (6; 106), and the optical system (10; 110) being configured to form an image of said virtual image (4, 6.2; 104, 106.2)
**characterized in that** the optical system (10; 110) has a focal point (10.3; 110.3) located in a region located between the virtual image (4; 104) of the light source (4; 104) and the virtual image (6.2; 106.2) of the reflective surface (6.2; 106.2).

2. Luminous device (2; 102) according to Claim 1, **characterized in that** the reflective surface (6.2; 106.2) of the collector (6; 106) and the mirror (7; 107) are configured so that the light rays reflected by a rear portion of said reflective surface (6.2; 106.2) are parallel to the optical axis (8, 108) or have, in a vertical plane with respect to said axis, an angle of inclination smaller than or equal to 25°, and preferably smaller than or equal to 10°.

3. Luminous device (2; 102) according to one of Claims 1 and 2, **characterized in that** the mirror (7; 107) is planar and parallel to the optical axis (8; 108) or is inclined with respect to said optical axis by an angle smaller than 10°.

4. Luminous device (2; 102) according to one of Claims 1 to 3, **characterized in that** the light source (4; 104) is configured to emit light rays in a main direction that is perpendicular to the optical axis (8; 108) or that is inclined with respect to a direction perpendicular to said optical axis by an angle smaller than 25°.

5. Luminous device (2; 102) according to one of Claims 1 to 4, **characterized in that** the reflective surface (6.2; 106.2) of the collector (6; 106) has a parabolic or elliptical profile.

6. Luminous device (2) according to one of Claims 1 to 5, **characterized in that** the mirror (7) forms an extension, toward the optical system (10), of the reflective surface (6.2) of the collector (6).

7. Luminous device (2) according to one of Claims 1 to 6, **characterized in that** the reflective surface (6.2) of the collector (2) is configured to reflect the light rays emitted by the light source (4) in a main direction that is divergent with the optical axis (8).

8. Luminous device (102) according to one of Claims 1 to 5, **characterized in that** the light source (104) is placed on a substrate (118), the mirror (7) being aligned with said substrate (118).

9. Luminous device (102) according to Claim 8, **characterized in that** the reflective surface (106.2) of the collector (6) is configured to reflect the light rays emitted by the light source (104) in a main direction that is convergent with the optical axis (108), said optical axis passing through the substrate (118).

10. Luminous device (2; 102) according to one of Claims 1 to 9, **characterized in that** the focal point (10.3; 110.3) of the optical system (10; 110) is located on the virtual image (6.2; 106.2) of the reflective surface (6.2; 106.2), behind the virtual image (4; 104) of the virtual light source (4; 104) along the optical axis (8; 108).

11. Luminous device (2; 102) according to Claim 10, **characterized in that** the optical system comprises a lens (10; 110) corresponding to a segment of a convergent lens centred on a virtual optical axis (8; 108) parallel to the optical axis (8; 108) and passing through the focal point (10.3; 110.3) of the optical system.

12. Luminous device (2; 102) according to one of Claims 1 to 11, **characterized in that** the reflective surface (6.2; 106.2) of the collector (6; 106) has a rear edge (6.2.1; 106.2.1), the light beam (12; 112) being a beam containing a flat cutoff, said cutoff being an image of said rear edge.

13. Luminous device (2; 102) according to Claim 12, **characterized in that** the light source (4; 104) and the collector (6; 106) are located above the optical axis (8; 108) when the luminous device is in functional position, the cutoff of the light beam (12; 112) being a lower cutoff.

14. Luminous device (2'; 102') according to Claim 12, **characterized in that** the light source (4; 104) and the collector (6; 106) are located below the optical axis (8; 108) when the luminous device is in functional position, the cutoff of the light beam (12'; 112') being an upper cutoff.

15. Luminous device (2) according to one of Claims 1 to 14, **characterized in that** the light source (4; 104), the collector (6; 106) and the light beam (12; 112) are a first light source, a first collector and a first light beam, respectively, the luminous device comprising a second light source (14) and a second collector (16) with a reflective surface configured to collect and reflect the light rays emitted by the second light source (14), the optical system (10; 110) being configured to project the light rays coming from said reflective surface into a second light beam along an optical axis of the device and corresponding to an image of said reflective surface.

16. Luminous device according to Claim 15, **characterized in that** the first collector (6; 106) and the first light source (4; 104) are opposite, with respect to the optical axis (8; 108), to the second collector (16) and to the second light source (14), respectively; or the first collector and the first light source, on the one hand, and the second collector and the second light source, on the other hand, are placed side-by-side.
